(19) **Europäisches Patentamt European Patent Office Office européen des brevets**

(11) **EP 3 616 163 B1**

(12) **EUROPEAN PATENT SPECIFICATION**

(45) Date of publication and mention of the grant of the patent:
**18.08.2021 Bulletin 2021/33**

(21) Application number: **18718484.1**

(22) Date of filing: **26.04.2018**

(51) Int Cl.:
**G06T 7/70** (2017.01)      **G06T 7/00** (2017.01)

(86) International application number:
**PCT/EP2018/060682**

(87) International publication number:
**WO 2018/197601 (01.11.2018 Gazette 2018/44)**

(54) **ROBOTIC SYSTEMS AND METHODS FOR OPERATING A ROBOT**

ROBOTIC SYSTEMS AND METHODS FOR OPERATING A ROBOT

SYSTÈMES ROBOTIQUES ET PROCÉDÉS DE FONCTIONNEMENT D'UN ROBOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.04.2017 US 201762490379 P**
**17.08.2017 EP 17186702**

(43) Date of publication of application:
**04.03.2020 Bulletin 2020/10**

(73) Proprietor: **ABB Schweiz AG**
**5400 Baden (CH)**

(72) Inventors:
• **MORATO, Carlos**
  **Bellevue**
  **WA 98004 (US)**
• **ZHANG, Biao**
  **27539 Apex, North Carolina (US)**
• **MARTINEZ, Carlos**
  **South Windsor**
  **CT 06074 (US)**

(74) Representative: **Zimmermann & Partner Patentanwälte mbB**
**Postfach 330 920**
**80069 München (DE)**

(56) References cited:
**US-A1- 2017 140 539**

• **ELISABETH MENENDEZ ET AL: "Tunnel structural inspection and assessment using an autonomous robotic system", AUTOMATION IN CONSTRUCTION, vol. 87, 1 March 2018 (2018-03-01), pages 117-126, XP055478570, AMSTERDAM, NL ISSN: 0926-5805, DOI: 10.1016/j.autcon.2017.12.001**
• **LE TRUC ET AL: "Circle detection on images by line segment and circle completeness", 2016 IEEE INTERNATIONAL CONFERENCE ON IMAGE PROCESSING (ICIP), IEEE, 25 September 2016 (2016-09-25), pages 3648-3652, XP033017186, DOI: 10.1109/ICIP.2016.7533040**

EP 3 616 163 B1

**Description**

TECHNICAL FIELD

The present application generally relates to robots and more particularly, but not exclusively, to robotic systems and methods for operating a robot.

BACKGROUND

Robotic systems and methods for operating a robot remain an area of interest. Some existing methods systems have various shortcomings, drawbacks and disadvantages relative to certain applications. For example, in some methods and systems, detecting features in a structure may be inefficient. Such systems are known from e.g. US 2017/0140539 A1 or WO 2016/189764 A1. Accordingly, there remains a need for further contributions in this area of technology.

SUMMARY

One embodiment of the present invention is a unique method for operating a robot. Another embodiment is a unique robotic system. Other embodiments include apparatuses, systems, devices, hardware, methods, and combinations for robots and robotic vision. Further embodiments, forms, features, aspects, benefits, and advantages of the present application shall become apparent from the description and figures provided herewith.

BRIEF DESCRIPTION OF THE FIGURES

The description herein makes reference to the accompanying drawings wherein like reference numerals refer to like parts throughout the several views, and wherein:

FIG. 1 illustrates some aspects of a non-limiting example of an scene in a mine having cavities (e.g., drilled holes) in a mine wall sought to be filled with explosive material by a robot, wherein the scene is unknown to the robot prior to detection of the cavities in accordance with an embodiment of the present invention.

FIG. 2 illustrates some aspects of a non-limiting example two inconsistent points in both a higher and a lower dimensionality space, and a geodesic connecting them.

FIG. 3 illustrates some aspects of a non-limiting example of detected boundary points in accordance with an embodiment of the present invention, wherein the detected boundary points are shown in red in a color version of FIG. 3, and indicated by a "+" symbol.

FIG. 4 illustrates some aspects of a non-limiting example of a canonical space at lower dimensionality pertaining to a mining wall or mine wall.

FIG. 5 illustrates some aspects of a non-limiting example of several cavities and centroids in a mine wall being detected in accordance with an embodiment of the present invention.

FIG. 6 illustrates some aspects of a non-limiting example of multi-cavity detection in a mine wall, including simultaneous detection of cavities in a point cloud, in accordance with an embodiment of the present invention.

DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates within the scope of the appended claims.

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

Some aspects of the present invention pertain to unsupervised multi-cavity detection in 3D scanning, e.g., for the automatic detection of cavities for robotic charging processes in mining walls (mine walls).

The charging process in mining applications may include several steps: assembling the detonating cord with the detonator package; carrying the detonator package from a magazine holder to the cavity (a drilled hole in the mine wall) and inserting the detonator package into the cavity; and pumping explosive material into the cavity. If the charging process is to be performed by a robot, this requires a robust detection and identification of the cavities in order to accurately positioning the robot tooltip and locate the pump hose into the cavity.

While it may be possible for a human to perform manual hose insertion (human in the loop), e.g., followed by robotic pumping of the explosive material into the cavity, such an approach presents an undesirable risk to such human operators. In another potential approach, it may be possible to employ a 2D passive camera based cavity detection (e.g., 2D visual servo control) to allow a robot to identify cavities and pump or inject explosive material into the cavity. Such an approach would use a 2D video camera to generate or extract a 3D representation of the environment, specifically from the 2D video data. However, passive cameras, such as a 2D video camera, typically require environments with constant illumination in order to detect the depth information, information that is used to accurately locate cavities in a 3D Euclidian space. Mining environments typically cannot provide such an environment. Moreover, mining wall surfaces are typically irregular, making the automated detection of cavities difficult.

Due to the dark environment and the uneven surface in the mining walls, the extraction of cavity positions in the image frame can be very difficult. Because of this challenging environment, it may be thought desirable to focus on the detection of single cavities. However, such an approach makes the process extremely slow and still inaccurate. Passive cameras have a noise dominant measurement, and therefore accuracy cannot be guaranteed. Also, single cavity detection would be slow, due to the fact that the sensor has to hover around the cavity in order to detect the cavity, increasing the scanning time. An incremental scanning and cavity detection approach is not a scalable solution, because in some applications, there may be many cavities that must be processed, and because the number of cavities increases exponentially the time required to compute the cavity locations. In addition, in such an approach, inaccurate locations of detected cavities may be obtained, once the cavities are integrated, due to the scanning drift that occurs once the scanning sensor starts moving.

In order to obtain a 3D representation of the mining wall, some embodiments of the present invention employ one or more 3D sensors, such as RGB-D cameras, also called 3D cameras, to obtain a 3D point cloud data of the wall. In other embodiments, other 3D sensor types may be employed. The point cloud is then projected to topologically constrained canonical spaces. Multiple canonical spaces detect the depth difference and eliminate most of the irregularities, creating a set of cavity candidates that can be processed by image processing algorithms.

Some embodiments of the present invention describe a method of how a 3D point cloud can be analyzed for its independent lower dimensions manifold representations in order to specifically identify the irregularities in the wall that represent the cavities, the surrounding irregularities in the rocks, and possibly also the variation in diameters in the cavities.

Once these lower dimensional manifolds are identified, the uncorrelated components of the point cloud are compared relative to the other uncorrelated components of the point cloud that belong to other canonical spaces, allowing an unsupervised detection of all the cavities present in the 3D point cloud.

In one aspect, cavity detection is decoupled from the scanning source. In another aspect, a scalable solution is provided, i.e. processing time increases linearly to the size of the point cloud data, and specifically does not have proportionality to the number of cavities presented in the mining wall. In another aspect, some embodiments may reduce the overall detection time. In another aspect, cavity detection may be parallelized in some embodiments. In another aspect, the computational cost and time of detecting one cavity or N cavities in the point cloud that represents the entire wall may be reduced or minimized in some embodiments. In another aspect, some embodiments may improve the cavity detection robustness. In another aspect, statistical analysis of several canonical spaces may be employed to rank the cavity detection results. In another aspect, in some embodiments, cavity detection is point cloud density agnostic - algorithms employed in some embodiments do not require highly accurate point cloud data in order to perform robust predictions of cavity locations. In another aspect, some embodiments may improve the cavity detection accuracy for robot positioning. In another aspect, some embodiments may make the robot pump hose insertion in charging applications faster, and in some embodiments, more reliable.

Next, general aspects of the invention are described. Therein, the reference numbers of the Figures are used merely for illustration. The aspects are, however, not limited to any particular embodiment. Instead, any aspect described herein can be combined with any other aspect(s) or embodiments described herein unless specified otherwise.

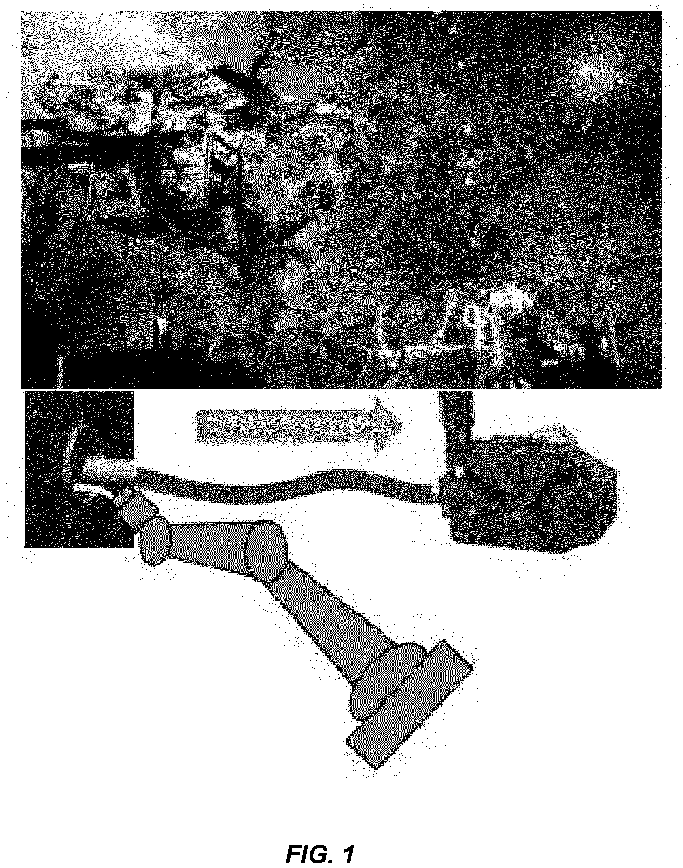

Referring to FIG. 1, in one aspect, some embodiments of the present invention describe a method for an unsupervised detection of cavities in uneven surfaces for robotic charging applications in mining. The method is a description of how a 3D point cloud can be analyzed for its independent lower dimensions manifold representations in order to identify the irregularities in the wall that are representing the cavities, the surrounding irregularities in the rocks, and possibly also the variation in diameters in the cavities.

Dimensionality reduction (DR) algorithms explain a given data set of high dimensionality, in terms of a small number of variables or coordinates. Most DR algorithms map the data to a coordinate system of given dimensionality that represents the given data while minimizing some error measurements.

According to embodiments, point cloud data are obtained, e.g. by one or more 3D sensors.

Once the point cloud data is obtained, we assume that the point cloud belongs to a manifold $M$, embedded into a high-dimensional Euclidean space $R^M$. The manifold $M$ is assumed to have a low intrinsic dimension m (m << M), i.e., it has a parametrization in a subset C of $R^m$, represented by the smooth bijective map $\varphi : C \ c \ R^m \to M$. The geodesic distance $\delta : M \ x \ M \to R$, defined as the length of the shortest paths on M (called geodesics), represent the intrinsic structure of the data.

Low cost and fast 3D cameras, such as Microsoft Kinect, make it possible to acquire point clouds in quasi-real-time with reasonable accuracy. In order to detect cavities accurately, reliably and robustly, 3D point cloud data of the wall has to be collected through the 3D sensor, where the density and quality of the point cloud are parameters and not a requirement. According to embodiments described herein, the point cloud data can be obtained by one or more 3D sensors

In some embodiments, the algorithm to detect N-cavities simultaneously is an unsupervised algorithm. Therefore there is no need of previous knowledge about the structure of the mining wall represented by the point cloud. The unsupervised multi-cavity detection from the 3D point cloud data may include one or more of the following steps in some embodiments: The first step is a topological constrained manifold analysis that aims to eliminate or is for eliminating irregularities by analyzing the data at its lower dimensionality. The second step is a lower dimensionality boundary detection that aims to label or is for labeling selected points as possible boundaries in a more controlled canonical space. The third step is a multi-cavity detection that analyses and scores the boundaries from the previous steps by applying image processing techniques. In the context of the present disclosure, "a more controlled canonical space" can be understood as a canonical space in which it is easier to extract characteristics therefrom. For instance, the more controlled canonical space may be a 2D distribution or normalized space, may be accessible for mapping eigenvektors, and/or may be transferred by a Laplacian transformation.

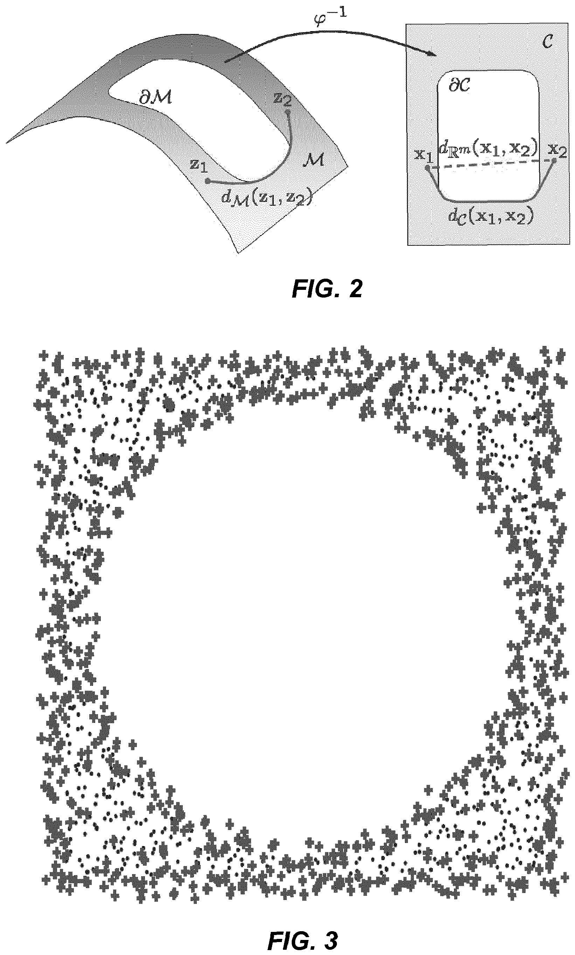

Regarding the first step, topological constrained manifold analysis, the goal of this step is, given $M$, to recover the parametrization in $R^m$. The intrinsic dimension m is usually assumed to be known a priori. The data samples are denoted by $z_i, i \in I$, a point on $M$, where $I$ is a set of continuous indices. See FIG. 2.

According to embodiments described herein, the method may include one or more of the following steps:

    1. Compute the $N \ x \ N$ matrix of geodesic distances $\Delta = (\delta_{ij})$
    2. Detect the boundary points $\partial M$ of the point cloud data manifold.
    3. Detect a subset of consistent distances according to the following criterion,

$$P_1 = \left\{ (i,j) : \left( z_i, z_j \right) \cap \partial M = \emptyset \right\}$$

$$P_2 = \left\{ (i,j) : \left( z_i, z_j \right) \leq \left( z_j, \partial M \right) + \partial (z_i, \partial M) \right\}$$

where $\partial(z_j, \partial M) = inf_{z' \in \partial M} \partial(z,z')$ denotes the distance from z to the boundary.
    4. Minimize the weighted stress,

$$X^* = \arg \min_{X \varepsilon R^{Nxm}} \sum_{i<j} w_{ij} \ (d_{ij}(X) - \delta_{ij})^2$$

with $w_{ij} = 1$ for all $(i,j) \in P$ and zero otherwise.

The obtained points $X_1^*, ..., X_N^*$ are the desired representation of M in $R^m$.

*Step 1:* Topologically constrained Manifold Analysis for point cloud data

Some embodiments include an approach that allows handling point cloud data manifolds of arbitrary topology and still provide for the detection and elimination of inconsistences. See FIG. 2.

Regarding the second step, boundary detection, some embodiments employ a boundary detection method, e.g. based on studying the properties of the coordinates of nearest neighbors of each point, reconstructed from local distances using classical canonical space mapping.

1 **for** $i = 1, …, N$
2     Find the set $N(i)$ of the $K$ nearest neighbors of the point $i$.
3     Apply canonical mapping to the $K \times K$ matrix

$$\Delta_K = (\delta_{kl\epsilon(i)}) \text{ and obtain a set of local coordinates } x_1^*, …, x_N^* \in R^m$$

4     **for** $j, k \in N(i)$ such that $\dfrac{\langle x_j' - x_i', x_k' - x_i' \rangle}{\|x_j' - x_i'\| \cdot \| x_k' - x_i'\|} \approx -1$

5     Mark the pair $(j; k)$ as valid.

6     **if** $\left| x' : \dfrac{\langle x' - x_i', v_l \rangle}{\|x' - x_i'\|} \approx 1 \right| \geq \tau_a |N(i)|$ for all $l = 1, …, m\text{-}1$ then

7     Label the pair $(j; k)$ as satisfied.
    ($v_l$ denotes the $l$th vector of an orthonormal basis of the
    subspace of $R^m$ orthogonal to $x_j' - x_k'$).

8.     **end if**
9.   **end for**
10   **if** the ratio of satisfied to valid pairs is smaller than threshold $\tau_\alpha$ then
11.     Label point $i$ as boundary.
12   **end if**
13 **end for**

*Step 2:* Boundary detection in a lower dimensional manifold (See FIG. 3).

The method of some embodiments assumes that the point and its two opposite neighbors are a part of a curve along the boundary. It then tries to find points that are placed outside of this boundary on both sides of it, violating the conjecture. (See FIG. 3).

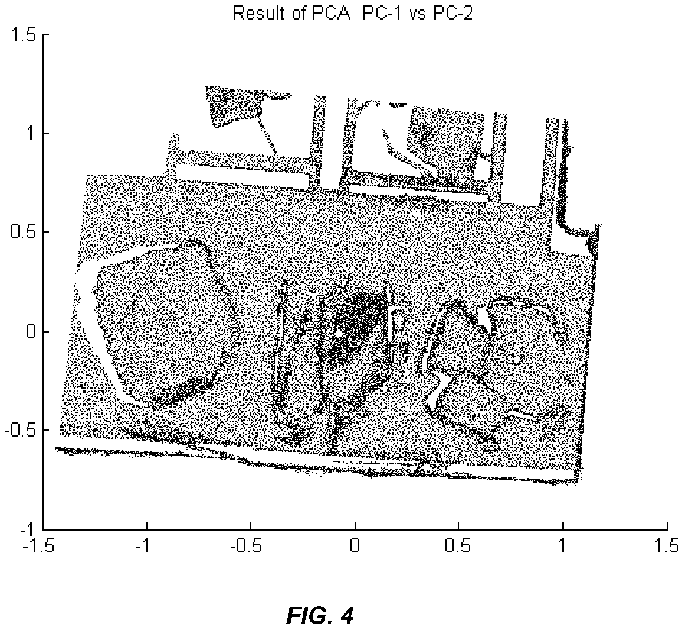

Regarding the third step, multi-cavity detection, after step 1 (topological constrained manifold analysis) and step 2 (boundary detection), the point cloud representation at the lower dimensional manifold with a label border is almost a noise free representation (See FIG. 4) that allows a more robust detection of cavities.

Once the data (a ranked lower dimensional manifold and borders) is available, the next task is the automatic data processing, with the major aim of detecting the cavities. Automatic methods may be employed to help to detect cavities now represented by empty circles in a 1d-manifold, region growing. In some embodiments, the Hough-transform and Random Sample Consensus (RANSAC) paradigms, among others, may be employed. In some embodiments, the method uses a combination of the Hough-transform and RANSAC. For example, in some situations, the Hough-transform may be very sensitive to the segmentation parameter values. Therefore, in some embodiments, the RANSAC algorithm is utilized, and is extended to exceed its limitations by the addition of the Hough-transform.

In some embodiments, this extension (Hough+RANSAC) allows harmonizing the mathematical aspect of the algorithm with the geometry of a circle. This extended approach has provided very satisfactory results, even in the case of very weak point cloud density and for different levels of mining wall complexity.

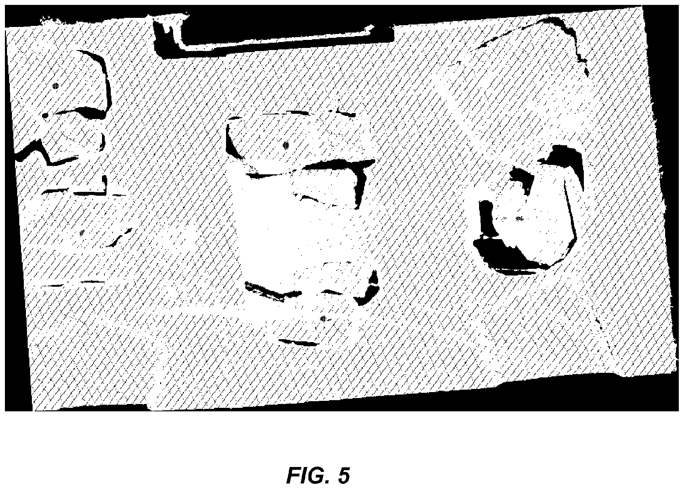

Referring to FIG. 5, some aspects of a non-limiting example of several cavities and centroids being detected in accordance with an embodiment of the present invention are illustrated.

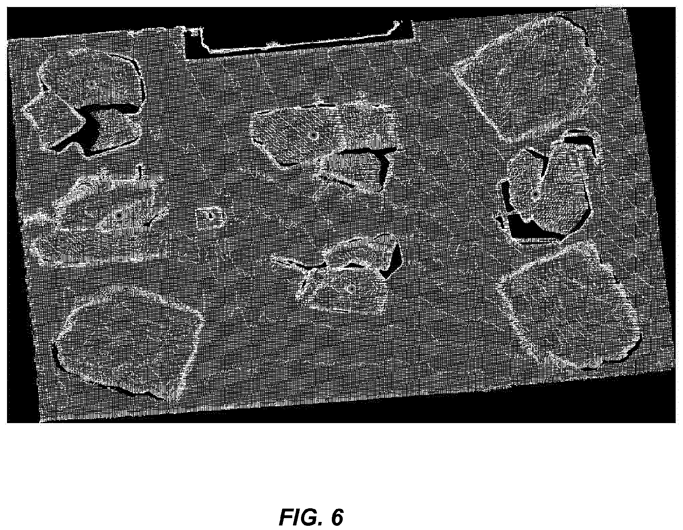

Referring to FIG. 6, some aspects of a non-limiting example of multi-cavity detection, including simultaneous detection of cavities in a point cloud, in accordance with an embodiment of the present invention are illustrated.

Embodiments of the present invention include a method for operating a robot, comprising: detecting a plurality of cavities in a structure, including: operating a 3D sensor to obtain 3D point cloud data of the structure; analyzing the 3D point cloud data at a lower dimensionality to eliminate irregularities; performing boundary detection of the 3D point cloud data at the lower dimensionality; and performing a multi-cavity detection of the 3D point cloud data to detect the plurality of cavities; directing the robot to a cavity of the plurality of cavities; and performing a robotic action on the cavity using the robot.

In a refinement, the robot includes a robotic tool, further comprising engaging the cavity with the robotic tool.

In another refinement, the method further comprises the robot pumping a material into the cavity.

In yet another refinement, the structure is a mine wall; and the plurality of cavities are a plurality of drilled holes in the mine wall.

In still another refinement, the plurality of cavities are represented in the multi-cavity detection as empty circles in a 1D manifold.

In yet still another refinement, the boundary detection of the 3D point cloud data is performed based on the properties of coordinates of nearest neighbors of at least some points in the 3D point cloud.

In a further refinement, the multi-cavity detection is performed using both a Hough transform and random sample consensus (RANSAC).

Embodiments of the present invention include a robotic system comprising:

a robot; a 3D sensor; and a controller in communication with the sensor, wherein the controller is operative to detect a plurality of cavities in a structure, including: operating the 3D sensor to obtain 3D point cloud data of the structure; analyzing the 3D point cloud data at a lower dimensionality to eliminate irregularities; performing boundary detection of the 3D point cloud data at the lower dimensionality; and performing a multi-cavity detection of the 3D point cloud data to detect the plurality of cavities, wherein the robot is operative to perform a robotic operation on at least one cavity of the plurality of cavities.

According to an aspect, the robotic system may further include a network interface for connecting the device to a data network, in particular a global data network. The data network may be a TCP/IP network such as Internet. The robotic system may be operatively connected to the network interface for carrying out commands received from the data network. The commands may include a control command for controlling the device to carry out a task such as performing a robotic operation. In this case, the robotic system is adapted for carrying out the task in response to the control command. The commands may include a status request. In response to the status request, or without prior status request, the robotic system may be adapted for sending a status information to the network interface, and the network interface is then adapted for sending the status information over the network. The commands may include an update command including update data. In this case, the robotic system is adapted for initiating an update in response to the update command and using the update data."

The data network may be an Ethernet network using TCP/IP such as LAN, WAN or Internet. The data network may include distributed storage units such as Cloud. Depending on the application, the Cloud can be in form of public, private, hybrid or community Cloud.

According to a further aspect, the robotic system may further include a processing unit for converting the signal into a digital signal (or processing the signal...).

According to a further aspect, the robotic system may further include a network interface for connecting the robotic system to a network, wherein the network interface is configured to transceive digital signal/data between the robotic system and the data network, wherein the digital signal/data include operational command and/or information about the device or the network.

While the invention has been illustrated and described in detail in the drawings and foregoing description, the same is to be considered as illustrative and not restrictive in character, it being understood that only the preferred embodiments have been shown and described and that all changes and modifications within the scope of the appended claims to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

**Claims**

1. A computer-implemented method for operating a robot, comprising:

    detecting a plurality of cavities in a structure, including:

        operating a 3D sensor to obtain 3D point cloud data of the structure;
        analyzing the 3D point cloud data at a lower dimensionality to eliminate irregularities;
        performing boundary detection of the 3D point cloud data at the lower dimensionality for labeling selected points as possible boundaries; and

performing a multi-cavity detection of the 3D point cloud data at the lower dimensionality, including analysing and scoring the boundaries to detect the plurality of cavities;

directing the robot to a cavity of the plurality of cavities; and
performing a robotic operation on the cavity using the robot.

2. The method of claim 1, wherein the robot includes a robotic tool, further comprising engaging the cavity with the robotic tool.

3. The method of claim 2, further comprising the robot pumping a material into the cavity.

4. The method of claim 1, wherein the structure is a mine wall; and wherein the plurality of cavities are a plurality of drilled holes in the mine wall.

5. The method of claim 1, wherein the plurality of cavities are represented in the multi-cavity detection as empty circles in a 1D manifold.

6. The method of claim 1, wherein the boundary detection of the 3D point cloud data is performed based on the properties of coordinates of nearest neighbors of at least some points in the 3D point cloud.

7. The method of claim 1, wherein the multi-cavity detection is performed using both a Hough transform and random sample consensus (RANSAC).

8. A robotic system comprising:

a robot;
a 3D sensor; and
a controller in communication with the sensor, wherein the controller is operative to detect a plurality of cavities in a structure, including:

operating the 3D sensor to obtain 3D point cloud data of the structure;
analyzing the 3D point cloud data at a lower dimensionality to eliminate irregularities;
performing boundary detection of the 3D point cloud data at the lower dimensionality for labeling selected points as possible boundaries; and
performing a multi-cavity detection of the 3D point cloud data at the lower dimensionality, including analysing and scoring the boundaries to detect the plurality of cavities,
wherein the robot is operative to perform a robotic operation on at least one cavity of the plurality of cavities.

**Patentansprüche**

1. Computerimplementiertes Verfahren zum Betreiben eines Roboters, umfassend
Detektieren von mehreren Hohlräumen in einer Struktur, einschließlich:

Betreiben eines 3D-Sensors, um 3D-Punkt-Cloud-Daten der Struktur zu erhalten;
Analysieren der 3D-Punkt-Cloud-Daten bei einer niedrigeren Dimensionalität, um Unregelmäßigkeiten zu eliminieren;
Durchführen einer Grenzdetektion der 3D-Punkt-Cloud-Daten bei der niedrigeren Dimensionalität zum Bezeichnen selektierter Punkte als mögliche Grenzen; und
Durchführen einer Mehrhohlraumdetektion der 3D-Punkt-Cloud-Daten bei der niedrigeren Dimensionalität, einschließlich Analysieren und Bepunkten der Grenzen, um die mehreren Hohlräume zu detektieren;

Lenken des Roboters zu einem Hohlraum der mehreren Hohlräume; und
Durchführen einer Roboteroperation an dem Hohlraum unter Verwendung des Roboters.

2. Verfahren nach Anspruch 1, wobei der Roboter ein Roboterwerkzeug enthält, weiter umfassend das Ineingriffnehmen des Hohlraums mit dem Roboterwerkzeug.

**3.** Verfahren nach Anspruch 2, weiter umfassend, dass der Roboter ein Material in den Hohlraum pumpt.

**4.** Verfahren nach Anspruch 1, wobei die Struktur eine Minenwand ist und wobei die mehreren Hohlräume mehrere gebohrte Löcher in der Minenwand sind.

**5.** Verfahren nach Anspruch 1, wobei die mehreren Hohlräume in der Mehrhohlraumdetektion als leere Kreise in einem 1D-Verteiler dargestellt werden.

**6.** Verfahren nach Anspruch 1, wobei die Grenzdetektion der 3D-Punkt-Cloud-Daten auf Basis der Eigenschaften von Koordinaten von nächsten Nachbarn von mindestens einigen Punkten in der 3D-Punkt-Cloud durchgeführt wird.

**7.** Verfahren nach Anspruch 1, wobei die Mehrhohlraumdetektion unter Verwendung einer Hough-Transformation und eines RANSCAC (Random Sample Consensus) durchgeführt wird.

**8.** Robotersystem, umfassend:

einen Roboter;
einen 3D-Sensor; und
einen Controller in Kommunikation mit dem Sensor, wobei der Controller betreibbar ist zum Detektieren von mehreren Hohlräumen in einer Struktur, einschließlich:

Betreiben eines 3D-Sensors, um 3D-Punkt-Cloud-Daten der Struktur zu erhalten;
Analysieren der 3D-Punkt-Cloud-Daten bei einer niedrigeren Dimensionalität, um Unregelmäßigkeiten zu eliminieren;
Durchführen einer Grenzdetektion der 3D-Punkt-Cloud-Daten bei der niedrigeren Dimensionalität zum Bezeichnen selektierter Punkte als mögliche Grenzen; und
Durchführen einer Mehrhohlraumdetektion der 3D-Punkt-Cloud-Daten bei der niedrigeren Dimensionalität, einschließlich Analysieren und Bepunkten der Grenzen, um die mehreren Hohlräume zu detektieren;

wobei der Roboter betreibbar ist zum Durchführen einer Roboteroperation an mindestens einem Hohlraum der mehreren Hohlräume.

**Revendications**

**1.** Procédé mis en œuvre par ordinateur de fonctionnement d'un robot, comprenant :

la détection d'une pluralité de cavités dans une structure, comportant :

l'exploitation d'un capteur 3D pour obtenir des données de nuage de points 3D de la structure ;
l'analyse des données de nuage de points 3D à une dimensionalité inférieure pour éliminer des irrégularités ;
la réalisation d'une détection de frontières des données de nuage de points 3D à la dimensionnalité inférieure pour étiqueter des points sélectionnés en tant que frontières possibles ; et
la réalisation d'une détection de multiples cavités des données de nuage de points 3D à la dimensionnalité inférieure, comportant l'analyse et la notation des frontières pour détecter la pluralité de cavités ;

l'orientation du robot vers une cavité de la pluralité de cavités ; et
la réalisation d'une opération robotique sur la cavité à l'aide du robot.

**2.** Procédé selon la revendication 1, dans lequel le robot comporte un outil robotique, comprenant en outre l'introduction de l'outil robotique dans la cavité.

**3.** Procédé selon la revendication 2, comprenant en outre le pompage par le robot d'un matériau à l'intérieur de la cavité.

**4.** Procédé selon la revendication 1, dans lequel la structure est une paroi de mine ; et dans lequel la pluralité de cavités est une pluralité de trous forés dans la paroi de mine.

**5.** Procédé selon la revendication 1, dans lequel la pluralité de cavités est représentée dans la détection de multiples cavités par des cercles vides dans une variété 1D.

6. Procédé selon la revendication 1, dans lequel la détection de frontières des données de nuage de points 3D est réalisée en fonction des propriétés de coordonnées de voisins les plus proches d'au moins certains points dans le nuage de points 3D.

7. Procédé selon la revendication 1 , dans lequel la détection de cavités multiples est réalisée à l'aide à la fois d'une transformée de Hough et d'un consensus d'échantillons aléatoires (RANSAC).

8. Système robotique comprenant :

un robot ;
un capteur 3D ; et
une unité de commande en communication avec le capteur, l'unité de commande servant à détecter une pluralité de cavités dans une structure, comportant :

l'exploitation du capteur 3D pour obtenir des données de nuage de points 3D de la structure ;
l'analyse des données de nuage de points 3D à une dimensionnalité inférieure pour éliminer des irrégularités ;
la réalisation d'une détection de frontières des données de nuage de points 3D à la dimensionnalité inférieure pour étiqueter des points sélectionnés en tant que frontières possibles ; et
la réalisation d'une détection de multiples cavités des données de nuage de points 3D à la dimensionnalité inférieure, comportant l'analyse et la notation des frontières pour détecter la pluralité de cavités ;

dans lequel le robot sert à réaliser une opération robotique sur au moins une cavité de la pluralité de cavités.

FIG. 1

**FIG. 2**

**FIG. 3**

FIG. 4

*FIG. 5*

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170140539 A1

- WO 2016189764 A1